# EUROPÄISCHE PATENTANMELDUNG

(11) **EP 3 786 480 A1**
(43) Veröffentlichungstag der Anmeldung: **03.03.2021**
(21) Anmeldenummer: 20190102.2
(22) Anmeldetag: 07.08.2020
(51) Int. Cl.: F16H 7/02, F16H 55/08, F16H 55/17

(54) **ZAHNSCHEIBE EINES ZAHNRIEMENTRIEBS MIT UNSYMMETRISCHEM ZAHNPROFIL**

(30) Priorität: 30.08.2019 DE 102019213096
(71) Anmelder: ContiTech Antriebssysteme GmbH, 30165 Hannover (DE)
(72) Erfinder: Lorenz, Eduard c/o Continental AG, 30419 Hannover (DE)
(74) Vertreter: Continental Corporation

(57) **Zusammenfassung**

Zahnscheibe eines Zahnriementriebs, bei dem ein Zahnriemen aus elastomerem Material mit seiner verzahnten Antriebsseite die Zahnscheibe umlaufend umschlingt und die Verzahnungen von Zahnscheibe und Zahnriemen kämmend ineinandergreifen, wobei die Zahnscheibe an ihrem Zahngrund über einen Teil der Zahnbreite zum Inneren der Zahnscheibe weisende Öffnungen zur Abfuhr von Fremdkörpern oder Verschmutzungen zwischen den Zähnen aufweist, wobei das Zahnprofil der Zahnscheibe unsymmetrisch in Bezug auf die jeweilige Zahnmittelachse ausgebildet ist, wobei jeweils eine der Zahnflanken eines Zahnes der Zahnscheibe ein Stützprofil zur Aufnahme eines Zahnkopfs des Zahnriemens aufweist und die andere Zahnflanke ein Leit- oder Führungsprofil zur Ableitung von Fremdkörpern oder Verschmutzungen

## Beschreibung

Die Erfindung betrifft eine Zahnscheibe eines Zahnriementriebs, bei dem ein Zahnriemen aus elastomerem Material mit seiner verzahnten Antriebsseite die Zahnscheibe umlaufend umschlingt und die Verzahnungen von Zahnscheibe und Zahnriemen kämmend ineinandergreifen, wobei die Zahnscheibe an ihrem Zahngrund über einen Teil der Zahnbreite zum Inneren der Zahnscheibe weisende Öffnungen zur Abfuhr von Fremdkörpern oder Verschmutzungen zwischen den Zähnen aufweist. Ebenfalls betrifft die Erfindung einen Zahnriementrieb mit einer solchen Zahnscheibe sowie eine Fördereinrichtung und einen Zugmittelantrieb mit einem solchen Zahnriementrieb.

Zahnriemen können wesentlich höhere Drehmomente als vergleichbare Flach- der Keilriemen übertragen, sind aber auch anfällig gegenüber Störungen des Zahneingriffs durch Verschmutzungen. Bei einem geschlossenem Zahnprofil können die Zähne des Antriebsriemens zwar optimal an der Zahnriemenscheibe anliegen, es können sich jedoch im Zahnprofil Fremdkörper ansammeln. Dies kann den Kontakt zwischen dem Riemen bzw. dessen Zähnen und der Zahnriemenscheibe beeinträchtigen und insbesondere die Tiefe des Profils der Zahnriemenscheibe derart verringern, dass es zu einem Überspringen des Riemens gegenüber der Zahnriemenscheibe kommen kann.

Daher sind Zahnriementriebe mit Zahnscheiben, die an ihrem Zahngrund zum Inneren der Zahnscheibe weisende Öffnungen zur Abfuhr von Fremdkörpern oder Verschmutzungen aufweisen, so genannte offene Zahnscheiben, im Stand der Technik bekannt bei z.B. Zahnriemenantrieben für Zweiräder oder für andere Antriebs- oder Fördersysteme in rauen, steinigen oder staubigen Umgebungen.

Ganz allgemein betrachtet ergeben sich beim Umlauf während des kämmenden Eingriffs der Zahnpaarung zwischen Zahnscheibe und Zahnriemen - abhängig von der Kinematik und der Zahnprofilgestaltung - natürlich gänzlich andere Eingriffsverhältnisse als z.B. beim Abwälzen ineinandergreifender Zahnräder mit der dort üblichen Evolventenverzahnung. So können bei einem Riementrieb die Profilgestaltungen von Zahnriemen und Zahnscheibe entweder so ausgebildet sein, dass die Riemenstege des Zahnriemens, also die Bereiche zwischen den Riemenzähnen, sich auf den Zahnköpfen der der Scheibenverzahnung abstützen, oder so, dass sich der Zahnriemen mit seiner Zahnkopffläche in den Zahnlücken der Scheibenverzahnung abstützt.

Bei manchen Anwendungen und insbesondere auch bei Veränderungen der Eingriffsverhältnisse durch Ablagerungen oder Verschmutzungen zwischen den Zähnen treten beide Auflagen oder Abstützungen in einem mehr oder weniger unkontrollierbaren Zusammenspiel auf. Bei den offenen Zahnscheiben ist das zwar weniger der Fall, führt aber auch dort zu erhöhtem Verschleiß der Riemen und Räder. Eine Auflage der Riemenstege des Zahnriemens auf den Zahnköpfen der Scheibenverzahnung gilt dabei generell als weniger vorteilhaft.

Einer der Nachteile offener Zahnriemenscheiben besteht allerdings gerade darin, dass die Riemen, bedingt durch die Öffnungen am Zahngrund der Scheibe, eher mit dem Riemenstegen auf den Zahnköpfen der Scheibenverzahnung aufliegen. Dies kann zu Belastungen des Riemenkörpers und insbesondere der im Riemen eingebetteten Zugträger führen, was die Lebensdauer des Riemens verkürzen kann.

Ein weiterer Nachteil besteht darin, dass auch die Öffnungen bei offenen Zahnscheiben Probleme bereiten können. So kann es passieren, dass bei zu großen Öffnungen, d.h. bei einem zu breit ausgefräste Zahngrund, sich die Riemenzähne bei hoher Belastung in die Öffnung eindrücken und ein sauberes Auslaufen aus der Verzahnung nicht mehr möglich ist. Demgegenüber erlaubt zwar eine kleine Öffnung eine vorschriftsmäßige Anlage des Zahnriemens an die Zähne der Zahnscheibe, jedoch ist es dann möglich, dass Verschmutzungen zwischen den Zähnen nicht mehr ausgetragen werden können. Die richtige Auslegung und Anpassung sind also überaus schwierig.

Hier setzt nun die erfindungsgemäße Aufgabe an, die darin besteht, eine Zahnriemenscheibe für einen Zahnriementrieb mit verbesserten Eingriffsverhältnissen bereitzustellen, wobei die Zahnriemenscheibe als offene Zahnriemenscheibe ausgebildet ist, jedoch die im Stand der Technik bekannten Nachteile des Einklemmens und der mangelnden Schmutzabfuhr deutlich reduziert, die einfach herzustellen ist und die ausreichend Leistung übertragen kann.

Gelöst wird diese Aufgabe durch die Merkmale des Hauptanspruchs. Weitere vorteilhafte Ausbildungen sind in den Unteransprüchen offenbart.

Dabei ist das Zahnprofil der Zahnscheibe unsymmetrisch in Bezug auf die jeweilige Zahnmittelachse ausgebildet, wobei jeweils eine der Zahnflanken eines Zahnes der Zahnscheibe ein Stützprofil zur Aufnahme eines Zahnkopfs des Zahnriemens aufweist und die andere Zahnflanke ein Leit- oder Führungsprofil zur Ableitung von Fremdkörpern oder Verschmutzungen.

Mit einer solchen Ausbildung, nämlich mit der Ausbildung eines Stützprofils an einer der Zahnflanken, welches zur Aufnahme des Zahnkopfes des Zahnriemens ausreicht, verhindert man einerseits die Auflage der Riemenstege des Zahnriemens auf den Zahnköpfen der Scheibenverzahnung und sorgt andererseits durch das Leit- oder Führungsprofil für eine ausreichend große Öffnung und für ein sicheres Ableiten von Verschmutzungen aus der Verzahnung.

Der Zahnriemen stütz sich dann mit Teilen seiner Zahnkopffläche auf den Stützprofilen der Scheibenverzahnung ab. Das reicht erfahrungsgemäß in den meisten Fällen zur Leistungsübertragung völlig aus, insbesondere dann, wenn das Stützprofil an der Zahnflanke eine Zahnscheibenzahnes ausgebildet ist, die die durch den Zahnriemen übertragende Belastung aufnimmt oder, etwa bei einer Antriebsscheibe, den Zahnriemen antreibt. Das jeweilige Zahnflanken Profil, welches das Stützprofil aufweist, kann dann auch in bester Weise auf die Flankenform angepasst werden, so dass ein problemloser Einlauf und Auslauf des Zahnriemens in Verbindung mit dem der Zahnscheibe erfolgt.

Bei einem Zahnriementrieb mit einer erfindungsgemäßen Zahnscheibe ist daher eine konstruktive Ausgestaltung vorteilhaft, bei der die das Stützprofil zur Aufnahme eines Zahnkopfes des Zahnriemens aufweisenden Zahnflanken belastungsseitig vorgesehen sind, nämlich auf der kraftübertragenden oder kraftaufnehmenden Seite der Zahnscheibenzähne.

Eine vorteilhafte Weiterbildung der Zahnscheibe besteht darin, dass das Leit- oder Führungsprofil als vom Zahnkopf des jeweiligen Zahnscheibenzahnes zu dessen Zahnmittelachse zurückspringendes Profil ausgebildet ist, vorzugsweise als hinterschnittene Zahnflanke. Dadurch kann man auf sehr einfache Weise eine ausreichende Öffnung für die Abfuhr von Schmutz oder Fremdkörpern herstellen und an beliebige Einsatzzwecke anpassen.

Eine weitere vorteilhafte Ausbildung besteht darin, dass die Zahnscheibenzähne von einem Zahnscheibenkörper ausgehend ein- oder beidseitig axial auskragend ausgebildet sind, so dass die Zahnscheibenzähne am Zahnfuß lediglich über einen Teil der Zahnbreite mit dem Zahnscheibenkörper oder -steg verbunden sind. Insbesondere dann, wenn die Zähne des der Zahnkranzes der Zahnscheibe einseitig auskragend ausgebildet sind, lässt sich angepasst an die jeweilige Belastungssituation und Leistungsübertragung einerseits eine ausreichende Abstützung und Momentenübertragung durch den Zahnriemen erreichen und andererseits eine sichere und saubere Abfuhr von Verschmutzungen.

Eine weitere vorteilhafte Ausbildung besteht darin, dass die Auskragung der Zahnscheibenzähne durch einen radial zwischen Nabe der Zahnscheibe und dem jeweiligen Zahnfuss angeordneten Steg abgestützt ist. Damit lässt sich auf einfache Weise die übertragende Leistung bzw. das Drehmoment erhöhen und die auf die einzelnen Zähne einwirkenden Kräfte abstützen. Auch werden ein Biegen oder ein Schwingen der einzelnen Zähne sicher vermieden.

Eine weitere vorteilhafte Ausbildung im Sinne einer Maximierung der Schmutz- oder Staubabfuhr aus dem Verzahnungsbereich besteht darin, dass die zum Inneren der Zahnscheibe weisende Öffnungen über die gesamte Auskragung ausgebildet sind.

Besonders geeignet ist ein Zahnriementrieb mit eine erfindungsgemäßen Zahnscheibe für Anwendungen in rauen, steinigen oder staubigen Umgebungen, so z.B. für eine Fördereinrichtung einer Erntemaschine, vorzugsweise einen Schrägförderer eines Mähdreschers oder als Zugmittelantrieb eines zwei- oder mehrrädrigen Gelände- bzw. Offroad-Fahrzeugs, etwas eines Mountainbikes.

Anhand eines Ausführungsbeispiels soll die Erfindung näher erläutert werden. Es zeigen
- Fig. 1: schematisch in einer perspektivischen Ansicht eine erfindungsgemäße Zahnscheibe,
- Fig. 2: schematisch eine erfindungsgemäße Zahnscheibe in einer Seitenansicht,
- Fig. 3: schematisch einen Teil eines Zahnriementriebs mit einer erfindungsgemäße Zahnscheibe als Antriebsscheibe in einer Seitenansicht, mit Eingriff eines Zahnriemens.

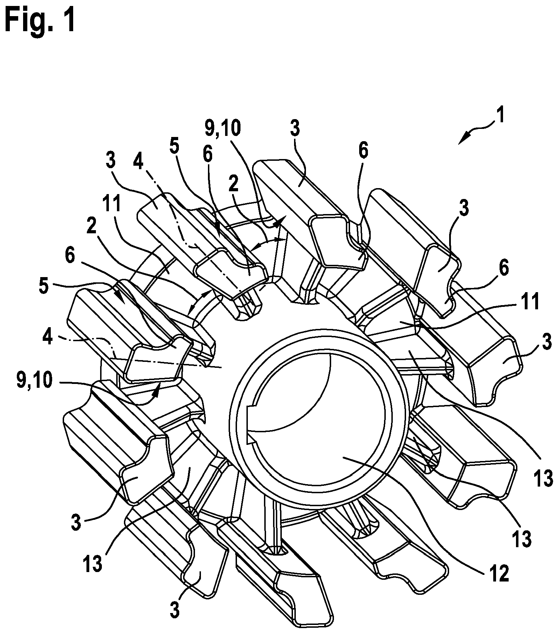

Die Fig. 1 zeigt schematisch in einer perspektivischen Ansicht eine erfindungsgemäße Zahnscheibe 1 eines Zahnriementriebs, die an ihrem Zahngrund über einen Teil der Zahnbreite zum Inneren der Zahnscheibe weisende Öffnungen 2 zur Abfuhr von Fremdkörpern oder Verschmutzungen zwischen den Zähnen 3 aufweist.

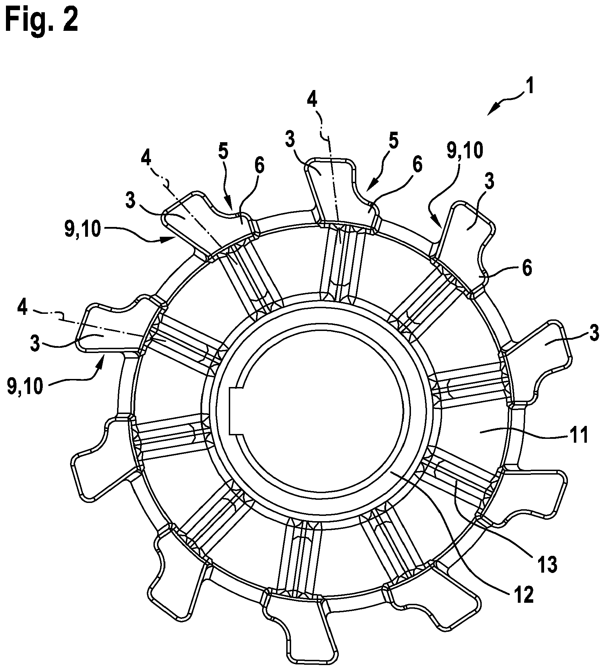

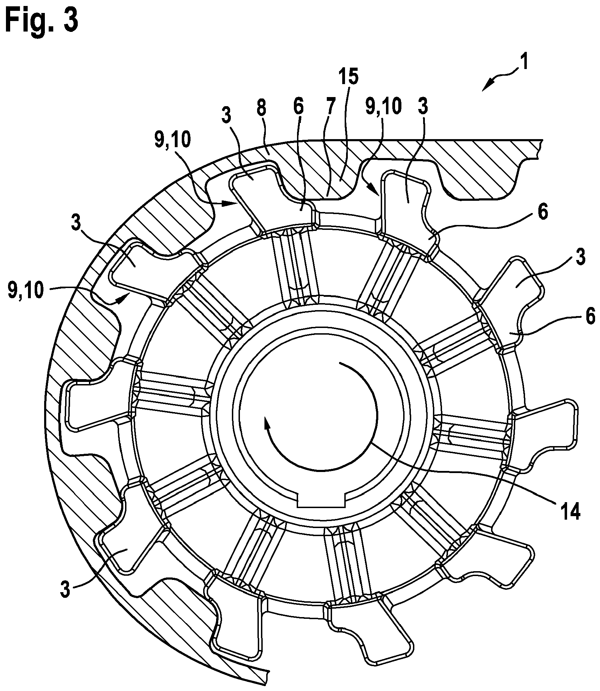

Das Zahnprofil der Zahnscheibe ist unsymmetrisch in Bezug auf die jeweilige Zahnmittelachse 4 ausgebildet. Dies wird auch in der Zusammenschau mit der Fig. 2 deutlich wird, in der schematisch eine erfindungsgemäße Zahnscheibe in einer Seitenansicht dargestellt ist. Eine der Zahnflanken eines Zahnes der Zahnscheibe, nämlich in der Ansicht der Figuren die jeweils rechte Zahnflanke 5, weist ein als Vorsprung im Zahnfußbereich ausgebildetes Stützprofil 6 auf zur Aufnahme eines Zahnkopfs 7 des zugehörigen Zahnriemens 8, wie in der Zusammenschau mit der Fig.3 zu erkennen.

Die andere, in der Ansicht der Figuren jeweils linke Zahnflanke 9, weist ein Leit- oder Führungsprofil 10 zur Ableitung von Fremdkörpern oder Verschmutzungen auf. Das Führungsprofil 10 ist hier ausgebildet als hinterschnittene Zahnflanke, nämlich als vom Zahnkopf des jeweiligen Zahnscheibenzahnes 3 zu dessen Zahnmittelachse 4 zurückspringendes Profil.

In der Fig. 1 ist darüber hinaus gut erkennbar, dass Zahnscheibenzähne 3 von einem Zahnscheibenkörper 11 ausgehend einseitig und in axialparalleler Richtung auskragend ausgebildet sind. Die Auskragung der Zahnscheibenzähne 3 ist durch einen radial zwischen der Nabe 12 der Zahnscheibe 1 und dem jeweiligen Zahnfuss angeordneten Steg 13 abgestützt. Ebenfalls ist in der perspektivischen Darstellung der Fig. 1 deutlich erkennbar, dass die zum Inneren der Zahnscheibe weisende Öffnungen über die gesamte Länge der Auskragung ausgebildet sind.

Fig. 3 zeigt ebenfalls schematisch einen Zahnriementrieb mit einer erfindungsgemäßen Zahnscheibe in einer Seitenansicht, nämlich in gleicher Ansicht wie in der Figur 2, wobei die hier dargestellte Zahnscheibe als Antriebsscheibe eines Zahnriementriebs ausgebildet ist und in Drehrichtung 14 antreibt. Dargestellt ist hier aber auch der Eingriff eines Zahnriemens 8, wobei deutlich wird, dass das Stützprofil zur Aufnahme eines Zahnkopfes 7 eines jeweiligen Zahnes 15 des Zahnriemens 8 an der belastungsseitigen Zahnflanke 5 der Zahnscheibenzähne 3 vorgesehen ist, nämlich auf der Seite der Zahnscheibenzähne, die die Antriebskraft bzw. das Antriebsmoment auf den Zahnriemen 8 überträgt.

### Bezugszeichenliste

### (Teil der Beschreibung)

- 1: Zahnscheibe
- 2: Öffnung
- 3: Zahnscheibenzahn
- 4: Zahnmittelachse
- 5: belastungsseitige Zahnflanke
- 6: Stützprofil
- 7: Zahnkopf des Riemenzahns
- 8: Zahnriemen
- 9: Zahnflanke mit Leit- oder Führungsprofil
- 10: Leit- oder Führungsprofil
- 11: Zahnscheibenkörper
- 12: Nabe
- 13: Steg
- 14: Drehrichtung Zahnscheibe
- 15: Zahnriemenzahn

## Patentansprüche

1. Zahnscheibe (1) eines Zahnriementriebs, bei dem ein Zahnriemen(8) aus elastomerem Material mit seiner verzahnten Antriebsseite die Zahnscheibe (1) umlaufend umschlingt und die Verzahnungen von Zahnscheibe und Zahnriemen kämmend ineinandergreifen, wobei die Zahnscheibe (1) an ihrem Zahngrund über einen Teil der Zahnbreite zum Inneren der Zahnscheibe weisende Öffnungen (2) zur Abfuhr von Fremdkörpern oder Verschmutzungen zwischen den Zähnen (3) aufweist, **dadurch gekennzeichnet, dass** das Zahnprofil der Zahnscheibe unsymmetrisch in Bezug auf die jeweilige Zahnmittelachse (4) ausgebildet ist, wobei jeweils eine der Zahnflanken eines Zahnes (3) der Zahnscheibe ein Stützprofil (6) zur Aufnahme eines Zahnkopfs (7) des Zahnriemens (8) aufweist und die andere Zahnflanke ein Leit- oder Führungsprofil (10) zur Ableitung von Fremdkörpern oder Verschmutzungen.

2. Zahnscheibe nach Anspruch 1, bei der das Leit- oder Führungsprofil (10) als vom Zahnkopf des jeweiligen Zahnscheibenzahnes zu dessen Zahnmittelachse (4) zurückspringendes Profil ausgebildet ist, vorzugsweise als hinterschnittene Zahnflanke (9).

3. Zahnscheibe nach Anspruch 1 oder 2, bei der die Zahnscheibenzähne (3) von einem Zahnscheibenkörper (11) ausgehend ein- oder beidseitig axial auskragend ausgebildet sind.

4. Zahnscheibe nach Anspruch 3, bei der die Auskragung der Zahnscheibenzähne (3) durch einen radial zwischen Nabe (12) der Zahnscheibe und dem jeweiligen Zahnfuss angeordneten Steg (13) abgestützt ist.

5. Zahnscheibe nach Anspruch 3 oder 4, bei der die zum Inneren der Zahnscheibe weisende Öffnungen über die gesamte Länge der Auskragung ausgebildet ist.

6. Zahnriementrieb mit einer Zahnscheibe nach einem der Ansprüche 1 bis 5, bei dem die das Stützprofil (6) zur Aufnahme eines Zahnkopfes (7) des Zahnriemens (8) aufweisenden Zahnflanken (5) belastungsseitig vorgesehen sind, nämlich auf der kraftübertragenden oder kraftaufnehmenden Seite der Zahnscheibenzähne (3).

7. Fördereinrichtung einer Erntemaschine, vorzugsweise Schrägförderer eines Mähdreschers, mit einem Zahnriementrieb nach Anspruch 6.

8. Zugmittelantrieb eines zwei- oder mehrrädrigen Geländefahrzeugs (Offroad), ausgebildet als Zahnriementrieb nach Anspruch 6.
